(19) Europäisches Patentamt
European Patent Office
Office européen des brevets

(11) Veröffentlichungsnummer: **0 285 034 B1**

(12) **EUROPÄISCHE PATENTSCHRIFT**

(45) Veröffentlichungstag der Patentschrift: **27.11.91**

(51) Int. Cl.[5]: **C08L 33/02**, C08L 33/14, C09D 133/02, C09D 133/14

(21) Anmeldenummer: **88104875.5**

(22) Anmeldetag: **25.03.88**

Verbunden mit 88902840.3/0364450
(europäische
Anmeldenummer/Veröffentlichungsnummer)
durch Entscheidung vom 07.12.90.

# (54) Härtbare Zusammensetzung auf Basis verzweigter Acrylate mit Carboxylgruppen und/oder verzweigter Acrylate mit Epoxidgruppen sowie Aminoplastharzen.

(30) Priorität: **31.03.87 DE 3710668**

(43) Veröffentlichungstag der Anmeldung:
**05.10.88 Patentblatt 88/40**

(45) Bekanntmachung des Hinweises auf die Patenterteilung:
**27.11.91 Patentblatt 91/48**

(84) Benannte Vertragsstaaten:
**AT BE CH DE ES FR GB IT LI NL SE**

(56) Entgegenhaltungen:
**EP-A- 0 103 199**
**DE-B- 3 022 996**

(73) Patentinhaber: **BASF Lacke + Farben Aktiengesellschaft**
**Max-Winkelmann-Strasse 80**
**W-4400 Münster(DE)**

(72) Erfinder: **Jung, Werner Alfons, Dr.**
**Uhrwerkerstrasse 65**
**W-4715 Ascheberg(DE)**

EP 0 285 034 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine härtbare Zusammensetzung auf Basis verzweigter, löslicher Acrylatcopolymerisate, welche erhältlich sind durch Copolymerisation von Monomeren mit mindestens zwei polymerisierbaren, olefinisch ungesättigten Doppelbindungen, funktionelle Gruppen tragenden Monomeren und weiteren polymerisierbaren Monomeren mit einer olefinisch ungesättigten Doppelbindung.

Aus der gattungsbildenden EP-A 103 199 ist ein Acrylatcopolymerisat bekannt, welches erhalten worden ist durch Copolymerisation von 10 bis 95 Gew.-% t-Butylacrylat, 0,1 bis 3 Gew.-% polyfunktioneller Monomeren, wie beispielsweise Trimethylolpropantriacrylat, 1 bis 30 Gew.-% Comonomeren mit einer funktionellen Gruppe und 0 bis 80 Gew.-% weiterer, polymerisierbarer, ethylenisch ungesättigter Monomere. Als Comonomere mit einer funktionellen Gruppe werden u.a. carboxylgruppenhaltige Monomere, wie Acrylsäure und MethacrylSäure, genannt. Aus dieser Schrift ist weiterhin eine Überzugszusammensetzung bekannt, welche ein carboxylgruppenhaltiges, durch Einpolymerisieren von mehrfach ethylenisch ungesättigten Monomeren verzweigtes Acrylatcopolymerisat und ein Polyepoxid als Vernetzer enthält. Die beschriebenen verzweigten Acrylatcopolymerisate führen zu Überzügen mit guter Wetterbeständigkeit, insbesondere guter Feuchtigkeitsbeständigkeit, was auf den Gehalt an einpolymerisiertem t-Butylacrylat zurückzuführen ist.

Aus der DE-PS 30 22 996 ist ein Einbrennlack bekannt, bei dem man carboxylgruppenhaltige Polymere, wie z.B. Acrylate auf Basis Acrylsäure oder Methacrylsäure und Glycidylgruppenhaltiger Acrylate zu einer härtbaren Zusammensetzung mischen kann. Dies führt zu Filmen mit höherer Härte und Wetterbeständigkeit.

In der WO 84/00771 ist ein Mehrkomponentensystem beschrieben, bei dem insgesamt vier Bindemitteltypen bzw. Komponenten miteinander vermischt und dann appliziert werden; die Komponenten sind:

a) OH-Acrylat,
b) Säureanhydrid, wobei mindestens 50 % Alkylhexahydrophthalsäureanhydride sind,
c) Epoxidharz und
d) Melaminharz.

Über die Topfzeit der Mischung werden keine Angaben gemacht; besonderer Vorteil gegenüber herkömmlichen Systemen soll der hohe Festkörper bei Applikation sein, zum Teil größer als 70 % Festkörper.

In der DE-OS 23 33 384 wird ein Bindemittel auf Basis acrylierter Polyester beschrieben, d.h. in einem OH-Polyester (oder Alkydharz) wird ein OH-Acrylat polymerisiert mit relativ kleiner Säurezahl, wobei die Vernetzung mit Melaminharzen und gleichzeitig Epoxidharzen durchgeführt werden kann. Die Mengenverhältnisse betragen: 60 bis 70 % OH-Copolymeri sat, 20 bis 30 % Melaminharz, 5 bis 15 % Epoxidharz.

Vorteile gegenüber bestehenden Systemen sollen sein: Verbesserte Wetterbeständigkeit (daher aromatenarme Acrylate), verbesserte Lösemittelbeständigkeit und verbesserte Ablaufneigung der Lacke an senkrechten Flächen.

Die Aufgabe der vorliegenden Erfindung bestand darin, alle positiven Eigenschaften der bekannten Überzugsmittel in einer härtbaren Zusammensetzung zu vereinen, insbesondere die Eigenschaften der Überzugsmittel in Hinsicht auf ihre Beständigkeit gegen langfristige Belastung durch Lösemittel, Chemikalien, Wasser bzw. Wasserdampf zu verbessern sowie gleichzeitig gute Härte und Elastizität zu erreichen. Weiterhin soll aus wirtschaftlichen Gründen ein hoher Festkörpergehalt der härtbaren Überzugsmittel bei relativ geringer Viskosität erreichbar sein.

Diese Aufgabe wird überraschenderweise durch eine härtbare Zusammensetzung gelöst, welche aus carboxylgruppenhaltigen Polymeren, epoxidgruppenhaltigen Polymeren und Aminoplastharzen besteht und wobei die Epoxidkomponente und/oder die Carboxyl-Komponente auf einem löslichen, verzweigten Acrylatcopolymerisat basiert, welches einen höheren Anteil an einpolymerisierten, mehrfach ethylenisch ungesättigten Monomeren aufweist als die in der EP-A-103 199 beschriebenen Acrylatharze. Im Vergleich zu linearen Acrylatharzen und den Acrylatharzen aus der EP-A-103 199 kann bei den erfindungsgemäßen Acrylatcopolymerisaten eine niedrigere Viskosität bei relativ hohem Festkörpergehalt erzielt werden. Erst durch die erfindungsgemäßen Reaktionsbedingungen während der Copolymerisation lassen sich Anteile von wesentlich mehr als 3 Gew.-% an mehrfach ungesättigten Monomeren in das Acrylatharz einbauen. Durch die stark verzweigte Struktur des Copolymerisats werden die funktionellen Gruppen des Acrylatharzes reaktiver, was einen großen Vorteil mit sich bringt.

Gegenstand der vorliegenden Erfindung ist eine härtbare Zusammensetzung, bestehend aus

A) einem Polymeren mit mindestens zwei COOH-Gruppen,
B) einem Polymeren mit mindestens zwei Epoxidgruppen und
C) einem Aminoplastharz, die dadurch gekennzeichnet ist, daß zumindest eine der Komponenten A) oder

B) auf einem verzweigten, löslichen Acrylatcopolymerisat basiert, wobei bei der Herstellung dieser verzweigten Acrylatcopolymerisate 5 bis 30 Gew.-%, bezogen auf das Gesamtgewicht der Monomeren, eines Monomeren mit mindestens zwei polymerisierbaren, olefinisch ungesättigten Doppelbindungen eingesetzt wird und wobei die Mengenverhältnisse der einzelnen Komponenten zueinander so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

Gemäß einer Ausführungsform der Erfindung basiert die Komponente A) auf einem löslichen verzweigten Copolymerisat, welches erhältlich ist durch Copolymerisation von

a1) 5 bis 30 Gew.-%, bevorzugt 5 bis 25 Gew.-% eines Monomeren mit mindestens zwei polymerisierbaren, olefinisch ungesättigten Doppelbindungen,

a2) 3 bis 50 Gew.-%, bevorzugt 8 bis 40 Gew.-%, eines carboxylgruppenhaltigen Monomeren

a3) mindestens 40 Gew.-% weiterer Monomerer mit einer polymerisierbaren, olefinisch ungesättigten Doppelbindung,

wobei die Summe von a1), a2) und a3) 100 Gew.-% beträgt,in einem organischen Lösungsmittel bei 70 bis 130 °C, vorzugsweise bei 80° bis 120 °C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert.

Als Komponente a1) können vorteilhaft Verbindungen der allgemeinen Formel

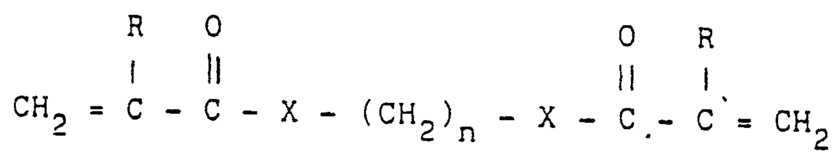

verwendet werden, in der bedeuten:

R = H oder $CH_3$

X = O, NR', S mit R' = H, Alkyl, Aryl

n = 2 bis 8.

Beispiele für derartige Verbindungen sind Hexandioldiacrylat, Hexandioldimethacrylat, Glykoldiacrylat, Glykoldimethacrylat, Butandioldiacrylat, Butandioldimethacrylat, Hexamethylenbismethacrylamid, Trimethylolpropantriacrylat, Trimethylolpropantrimethacrylat. Geeignet sind auch Divinylverbindungen wie Divinylbenzol. Es können auch mehrfach ungesättigte Monomere mit einer funktionellen Gruppen verwendet werden, beispielsweise Bisacrylamidoessigsäure. Selbstverständlich können auch Kombinationen der mehrfach ungesättigten Monomeren eingesetzt werden.

Weitere mögliche Komponenten a1) sind Umsetzungsprodukte aus einer Carbonsäure mit einer polymerisierbaren, olefinisch ungesättigten Doppelbindung und Glydidylacrylat und/oder Glycidylmethacrylat. Es kann auch eine mit einem ungesättigten, eine polymerisierbare Doppelbindung enthaltenden Alkohol veresterte Polycarbonsäure oder ungesättigte Monocarbonsäure als Komponente a1) eingesetzt werden. Als Monomere mit mindestens zwei polymerisierbaren, olefinisch ungesättigten Doppelbindungen werden auch Umsetzungsprodukte eines Polyisocyanats mit ungesättigte, polymerisierbare Doppelbindungen enthaltenden Alkoholen oder Aminen eingesetzt. Als Beispiel hierfür sei das Umsetzungsprodukt aus einem Mol Hexamethylendiisocyanat mit zwei Molen Allylalkohol genannt.

Als Komponente a2) eignet sich besonders $\beta$-Carboxyethylacrylat; es kommen weiterhin Acrylsäure, Methacrylsäure, Itaconsäure, Crotonsäure, Aconitsäure, Malein- und Fumarsäure oder deren Halbester in Frage.

Die Auswahl der Komponente a3) richtet sich weitgehend nach den gewünschten Eigenschaften des Acrylatcopolymerisats in bezug auf Elastizität, Härte, Verträglichkeit und Polarität. Diese Eigenschaften lassen sich zum Teil mit Hilfe der bekannten Glasübergangstemperaturen der Monomeren steuern. Die Monomeren können ausgewählt sein aus der Gruppe Styrol, Vinyltoluol, Alkylester der Acrylsäure und der Methacrylsäure, Alkoxyethylacrylate und Aryloxyethylacylate und der entsprechenden Methacrylate sowie

Ester der Malein- , Fumar-, Croton- und Dimethylacrylsäure.

Außerdem können als Komponente a3) auch hydroxylgruppenhaltige Monomere eingesetzt werden, beispielsweise Hydroxyalkylester der Acryl- und/oder Methacrylsäure. Es ist möglich, als weitere Monomere mit einer polymerisierbaren olefinisch ungesättigten Doppelbindung 0,1 bis 5 Gew.-%, bezogen auf das Gesamtgewicht aller Monomeren, Monomere mit Phosphorsäuregruppen, also z.B. Phosphorsäureester mit polymerisierbaren Doppelbindungen, einzusetzen.

Besonders vorteilhaft ist es, wenn in das eine Säurezahl von 20 bis 250, vorzugsweise 50 bis 180, aufweisende Acrylatcopolymerisat Monomere eingebaut werden, die Gruppen enthalten, die eine nachfolgende Vernetzung des Carboxylgruppen enthaltenden Acrylatcopolymerisats mit Epoxidgruppen katalysieren, also beispielsweise tertiäre Aminogruppen.

Die vorliegende Erfindung betrifft auch eine härtbare Zusammensetzung, die dadurch gekennzeichnet ist, daß als Komponente A) ein lösliches verzweigtes Acrylatcopolymerisat eingesetzt wird, welches erhältlich ist durch Copolymerisation von

a1) 5 bis 30 Gew.-%, bevorzugt 5 bis 25 Gew.-% eines Monomeren mit mindestens zwei polymerisierbaren, olefinisch ungesättigten Doppelbindungen, wobei Di- und Polyester von Di- und Polyolen mit Acrylsäure ausgenommen sind,

a2) 3 bis 50 Gew.-%, bevorzugt 8 bis 40 Gew.-%, eines carboxylgruppenhaltigen Monomeren

a4) 0,1 bis 20 Gew.-%, bevorzugt 1 bis 10 Gew.-%, eines tertiären Amins mit einer polymerisierbaren, olefinisch ungesättigten Doppelbindung,

a5) 0 bis 40 Gew.-%, bevorzugt 5 bis 25 Gew.-%, eines hydroxylgruppenhaltigen Monomeren und

a3) 0 bis 80 Gew.-% weiterer Monomeren mit einer polymerisierbaren, olefinisch ungesättigten Doppelbindung, wobei die Summe der Komponenten a1), a2), a3), a4) und a5) 100 Gew.-% beträgt, in einem organischen Lösungsmittel bei 70 bis 130 °C, vorzugsweise bei 80 ° bis 120 °C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert, wobei die Mengenverhältnisse der einzelnen Komponenten zueinander so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

Als Komponente a1) können vorteilhaft Verbindungen der allgemeinen Formel

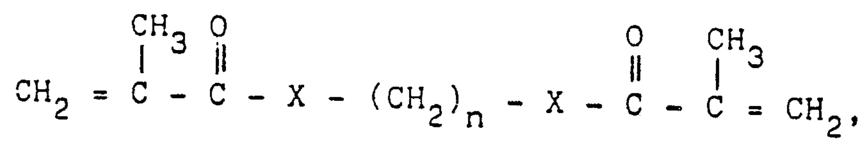

in der bedeuten:
X = O, NR', S mit R' = H, Alkyl, Aryl
n = 2 bis 8
verwendet werden.

Die Komponente a1) kann ein Umsetzungsprodukt aus einer Carbonsäure mit einer polymerisierbaren, olefinisch ungesättigten Doppelbindung, wobei Acrylsäure ausgeschlossen ist, und Glycidylmethacrylat sein. Weiterhin kommen mit einem ungesättigten, eine polymerisierbare Doppelbindung ungesättigte Monocarbonsäuren mit Ausnahme von Derivaten der Acrylsäure in Frage. Vorteilhafterweise werden die Komponenten a1) ausgewählt aus Produkten, die hergestellt werden aus Polyisocyanaten mit ungesättigte, polymerisierbare Doppelbindungen enthaltenden Alkoholen oder Aminen.

Beispiele für ethylenisch ungesättigte Verbindungen mit einer tertiären Aminogruppe, also für die Komponente a4), sind N,N'-Dimethylaminoethylmethacrylat, N,N'-Diethylaminoethylmethacrylat, 2-Vinylpyridin und 4-Vinylpyridin, Vinylpyrrolin, Vinylchinolin, Vinylisochinolin, N,N'-Dimethylaminoethylvinylether und 2-Methyl-4-vinylpyridin.

Gegebenenfalls können hydroxylgruppenhaltige Monomere eingesetzt werden. Als Beispiele seien Hydroxyalkylester der Acryl- und Methacrylsäure genannt, wie z.B. Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Die Auswahl der weiteren Monomeren mit einer polymerisierbaren, olefinisch ungesättigten Doppelbindung erfolgt aus der bereits obengenannten Gruppe.
Es ist auch in diesem Fall gegebenenfalls vorteilhaft, daß als weitere Monomere mit einer polymerisierbaren Doppelbindung 0,1 bis 5 Gew.-%, bezogen auf das Gesamtgewicht aller Monomeren, Monomere mit Phosphorsäuregruppen eingesetzt sind.

Besonders bevorzugt ist es, wenn als Komponente A) ein lösliches verzweigtes Acrylatcopolymerisat eingesetzt wird, welches erhältlich ist durch Copolymerisation von

a1) 5 bis 30 Gew.-%, bevorzugt 5 bis 25 Gew.-% eines Monomeren mit mindestens zwei polymerisierbaren, olefinisch ungesättigten Doppelbindungen, wobei Di- und Polyester von Di- und Polyolen mit Acrylsäure ausgenommen sind,
a4) 0,1 bis 20 Gew.-%, bevorzugt 1 bis 10 Gew.-%, eines tertiären Amins mit einer polymerisierbaren, olefinisch ungesättigten Doppelbindung,
a5) 0 bis 40 Gew.-%, bevorzugt 10 bis 30 Gew.-%, hydroxylgruppenhaltiger Monomere
a3) 0 bis 80 Gew.-% weiterer polymerisierbarer Monomere mit einer olefinisch ungesättigten Doppelbindung, wobei die Summe aller Monomeren

100 Gew.-% beträgt, in einem organischen Lösungsmittel bei 70 bis 130°C, vorzugsweise bei 80° bis 120°C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert,
und aus
a6) cyclischen Carbonsäureanhydriden,
wobei die Mengenverhältnisse der einzelnen Komponenten zueinander so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

Als Komponente a1) können vorteilhaft Verbindungen der allgemeinen Formel

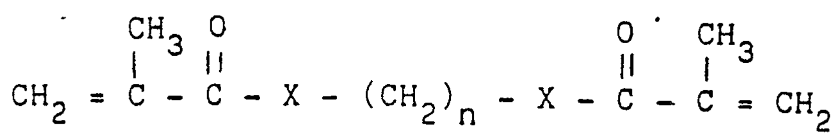

in der bedeuten:
X = 0, NR', S mit R' = H, Alkyl, Aryl
n = 2 bis 8
verwendet werden.

Beispiele für mehrfach ethylenisch ungesättigte Verbindungen sind Hexandioldimethacrylat, Glykoldimethacrylat, Butandioldimethacrylat, Trimethylolpropantrimethacrylat und Divinylbenzol. Es können vorteilhafterweise auch die bereits schon genannten ethylenisch ungesättigten Verbindungen eingesetzt werden, vorausgesetzt, daß es sich nicht um Di- und Polyester von Di- und Polyolen mit Acrylsäure handelt.

Als polymerisierbare tertiäre Amine kommen die bereits obengenannten in Frage.

Als Komponente a5) eignen sich Hydroxyalkylester der Acryl- und/oder Methacrylsäure mit einer primären Hydroxylgruppe, z.B. Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate sowie Hydroxyalkylester mit einer sekundären OH-Gruppe, wie 2-Hydroxypropylacrylat, 2-Hydroxybutylacrylat, 3-Hydroxybutylacrylat und die entsprechenden Methacrylate.

Außerdem kommen als Komponente a5) Umsetzungsprodukte aus Acrylsäure und/oder Methacrylsäure mit dem Glycidylester einer Carbonsäure mit einem tertiären $\alpha$-Kohlenstoffatom in Frage.

Die Auswahl der Komponente a3) ist nicht besonders kritisch und richtet sich nach den gewünschten Eigenschaften des Acrylatcopolymerisats. Es sei erwähnt, daß als Komponente a3) auch carboxylgruppenhaltige Monomere einsetzbar sind.

Beispiele für die Komponente a6) sind Phthalsäureanhydrid, Tetrahydrophthalsäureanhydrid, Hexahydrophthalsäureanhydrid, Bernsteinsäureanhydrid sowie deren halogenierte Derivate.

Die Erfindung betrifft auch eine härtbare Zusammensetzung, die dadurch gekennzeichnet ist, daß als Komponente A) ein lösliches, verzweigtes Acrylatcopolymerisat eingesetzt wird, welches erhältlich ist durch Copolymerisation von

a1) 5 bis 30 Gew.-%, bevorzugt 5 bis 25 Gew.-% eines Monomeren mit mindestens zwei polymerisierbaren, olefinisch ungesättigten Doppelbindungen,

a7) 1 bis 30 Gew.-%, bevorzugt 3 bis 20 Gew.-%, Monomere mit cyclischen Carbonsäureanhydridgruppen,

a3) 45 bis 80 Gew.-% weiterer polymerisierbarer Monomere mit einer olefinisch ungesättigten Doppelbindung,

wobei die Summe aller Monomerer

100 Gew.-% beträgt, in einem organischen Lösungsmittel bei 70 bis 130 °C, vorzugsweise bei 80° bis 120 °C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert und aus

a8) Verbindungen, die sowohl mindestens einen mit Säureanhydridgruppen reaktionsfähigen Wasserstoff als auch mindestens eine tertiäre Aminogruppe enthalten, wobei ein Teil der Carbonsäureanhydridgruppen auch mit einer monofunktionellen Verbindung mit aktivem Wasserstoff umgesetzt sein kann und die Mengenverhältnisse der einzelnen Komponenten zueinander so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

Als Komponente a1) eignen sich die bereits genannten, mehrfach ethylenisch ungesättigten Monomere einschließlich der Di- und Polyester von Di- und Polyolen mit Acrylsäure.

Beispiele für Monomere mit cyclischen Carbonsäureanhydridgruppen sind Maleinsäureanhydrid oder Itaconsäureanhydrid.

Die Auswahl der Komponente a3) richtet sich nach den gewünschten Eigenschaften des Acrylatcopolymerisats. Es sei erwähnt, daß sich in dem vorliegenden Fall auch Monomere mit Carboxylgruppen, also beispielsweise Acrylsäure oder Methacrylsäure, eignen.

Vorteilhafterweise werden als Komponente a8) Alkohole, welche eine tertiäre Aminogruppe enthalten, sowie primäre oder sekundäre Amine mit einer tertiären Aminogruppe eingesetzt. Der reaktionsfähige Wasserstoff der Komponente a8) kann aus einer Hydroxylgruppe, einer primären oder sekundären Aminogruppe oder einer Thiolgruppe stammen.

Beispiele für Alkohole mit tertiären Aminogruppen sind Addukte von sekundären Aminen und Epoxyverbindungen. Beispiele für sekundäre Amine sind Dimethylamin, Diethylamin, Dipropylamin, Dibutylamin, Morpholin und Pyrrolidin.

Beispiele für geeignete Epoxyverbindungen sind Ethylenoxid, Propylenoxid, Butylenoxid, Styroloxid und Cyclohexenoxid.

Geeignete Alkohole mit tertiären Aminogruppen, die durch Reaktion von sekundären Aminen mit Epoxyverbindungen erhalten werden, sind Dimethylaminoethanol, Diethylaminoethanol, Di-n-propylaminoethanol, Diisopropylaminoethanol, Di-n-butylaminoethanol, N-(2-hydroxyethyl)morpholin, N-(2-hydroxyethyl)-piperidin, N(2-hydroxyethyl)pyrrolidon, N-(2-hydroxyethyl)azeridin, N,N'-Dimethyl-2-hydroxypropylamin, N,N'-Diethyl-2-hydroxypropylamin, Triethanaolamin und Tripropanolamin.

Beispiele für die primaren oder sekundären Amine, welche eine tertiäre Aminogruppe enthalten, sind N,N'-dialkyl-1,3-propylendiamine, wie z.B. N,N'-dimethyl-1,3-propylendiamin, N,N-diethyl-1,3-propylendiamin und N,N'-dialkyl-1,4-tetraethylendiamine, wie z.B. N,N'-dimethyl-1,4-tetramethylendiamin und N,N'.diethyl-1,4-tetramethylendiamin. Weiterhin kommen N,N'-Dialkyl-1,6-hexamethylendiamine und N-Alkylpiperazine sowie 2-Aminopyridin, 4-Aminopyridin und N-Alkylaminopyridin in Frage.

Es sei erwähnt, daß ein Teil der Carbonsäureanhydridgruppen auch mit einer monofunktionellen Verbindung mit aktivem Wasserstoff, wie z.B. Alkoholen, umgesetzt sein kann.

Gemäß einer bevorzugten Ausführungsform der Erfindung wird die Komponente A) vorteilhafterweise erhalten durch Copolymerisation von

a1) 5 bis 30 Gew.-%, bevorzugt 5 bis 25 Gew.-% eines Monomeren mit mindestens zwei polymerisierbaren, olefinisch ungesättigten Doppelbindungen,

a9) 1 bis 30 Gew.-% von Glycidylestern von ethylenisch ungesättigten Carbonsäuren und/oder Glycidylethern von olefinisch ungesättigten Verbindungen,

a3) mindestens 40 Gew.-% weiterer polymerisierbarer Monomere mit einer olefinisch ungesättigten

Doppelbindung,
wobei die Summe aller Monomeren 100 Gew.-% beträgt,
in einem organischen Lösungsmittel bei 70 bis 130° C, vorzugsweise bei 80° bis 120° C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert,
und aus

a10) Aminen mit einer sekundären Aminogruppe oder Di- oder Polyaminen mit mindestens einer tertiären Aminogruppe und einer primären oder sekundären Aminogruppe und/oder
a11) Carbonsäuren, die ein tertiäres Stickstoffatom enthalten, und aus
a6) cyclischen Carbonsäureanhydriden.

Als Komponente a1) kommen die bereits genannten mehrfach ethylenisch ungesättigten Monomeren in Frage.

Beispiele für die Komponenten a9) sind Glycidylester der Acrylsäure oder der Methacrylsäure sowie Allyl- und Vinylglycidylether, Glycidylvinylester oder Glycidylallylester, wie Glycidylvinylphthalat, Glycidylallylphthalat.

Die Auswahl der Komponente a3) richtet sich nach den gewünschten Eigenschaften des Acrylatcopolymerisats und kann aus der bereits oben genannten Gruppe erfolgen. Es sollen aber keine carboxylgruppenhaltigen Aminogruppen enthaltenden Monomere als Komponente a3) verwendet werden, da diese mit der Oxirangruppe der Komponente a9) reagieren. Der Anteil an hydroxylgruppenhaltigen Monomeren sollte möglichst niedrig sein. Sind zur Erzielung einer bestimmten Polarität des Copolymerisats Hydroxylgruppen nötig, so sollten Monomere mit sekundären OH-Gruppen bevorzugt werden.

Beispiele für die Komponente a10) sind Imidazol, Aminopyridin, N-Alkylaminopyridin, Ethylpiperazin, Dibutylamin.

Beispiele für die Komponente a11) sind 3- und 4-Dimethylaminobenzoesäure, Picolinsäure und Dimethylaminosalicylsäure.

Als Beispiele für die Komponente a6) seien Phthalsäureanhydrid, Tetrahydrophthalsäureanhydrid, Hexahydrophthalsäureanhydrid, Bernsteinsäureanhydrid sowie deren halogenierte Derivate genannt.

Gemäß einer bevorzugten Ausführungsform der Erfindung kann die Komponente A) ein lösliches verzweigtes Acrylatcopolymerisat sein, das erhältlich ist durch Copolymerisation von

a1) 5 bis 30 Gew.-%, bevorzugt 5 bis 25 Gew.-% eines Monomeren mit mindestens zwei polymerisierbaren, olefinisch ungesättigten Doppelbindungen,
a2) 3 bis 50 Gew.-%, bevorzugt 8 bis 40 Gew.-%, eines carboxylgruppenhaltigen Monomeren
a5) 0 bis 40 Gew.-%, bevorzugt 3 bis 25 Gew.-%, eines hydroxylgruppenhaltigen Monomers und
a3) 0 bis 80 Gew.-% weiterer Monomeren mit einer polymerisierbaren, olefinisch ungesättigten Doppelbindung, wobei die Summe aller Monomeren
100 Gew.-% beträgt,

in einem organischen Lösungsmittel bei 70 bis 130° C, vorzugsweise bei 80° bis 120° C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert,
und aus

a12) Monoisocyanaten mit einer tertiären Aminogruppe im Molekül.

Als Komponente a12) kommen Additionsprodukte von Diisocyanaten mit Aminoalkoholen in Frage, wie z.B. Dimethyl- und Diethylaminoethanol. Die tertiäre Aminogruppe kann beispielsweise auch durch 2-Hydroxyethylpyridin eingeführt werden. Besonders bevorzugt ist ein Additionsprodukt von Isophorondiisocyanat mit Aminoalkoholen als Komponente a12).

Gemäß einer bevorzugten Ausführungsform der Erfindung kann die Komponente A) erhalten werden durch Copolymerisation von

a1) 5 bis 30 Gew.-%, bevorzugt 5 bis 25 Gew.-% eines Monomeren mit mindestens zwei polymerisierbaren, olefinisch ungesättigten Doppelbindungen,
a2) 0 bis 40 Gew.-%, bevorzugt 5 bis 30 Gew.-%, eines carboxylgruppenhaltigen Monomeren,
a5) 8 bis 50 Gew.-%, bevorzugt 10 bis 40 Gew.-%, eines hydroxylgruppenhaltigen Monomeren,
a3) 0 bis 80 Gew.-% weiterer polymerisierbarer Monomeren mit einer olefinisch ungesättigten Doppelbindung,

wobei die Summe aller Monomeren 100 Gew.-% beträgt,

in einem organischen Lösungsmittel bei 70 bis 130° C, vorzugsweise bei 80° bis 120° C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert,
und aus

a12) Monoisocyanaten mit einer tertiären Aminogruppe im Molekül und aus

a6) cyclischen Carbonsäureanhydriden.

Für den Fall, daß die Komponente B) auf einem löslichen, verzweigten Acrylatcopolymerisat basiert, wird dies erhalten durch Copolymerisation von

b1) 5 bis 30 Gew.-%, bevorzugt 5 bis 25 Gew.-%, eines Monomeren mit mindestens zwei polymerisierbaren, olefinisch ungesättigten Doppelbindungen,

b2) 5 bis 50 Gew.-%, bevorzugt 10 bis 40 Gew.-%, Monomeren mit einer Epoxidgruppe und

b3) mindestens 10 Gew.-% weiterer Monomeren mit einer polymerisierbaren, olefinisch ungesättigten Doppelbindung,

wobei die Summe von b1) bis b3) 100 Gew.-% beträgt, in einem organischen Lösungsmittel bei 70 bis 130° C, vorzugsweise bei 80° bis 120° C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert.

Als Komponente b2) werden vorzugsweise Glycidylester ungesättigter Carbonsäuren oder Glycidylether von ungesättigten Verbindungen eingesetzt. Als Beispiele seien genannt: Glycidylacrylat, Glycidylmethacrylat, Glycidylester der Malein- und Fumarsäure, Glycidylvinylphthalat, Glycidylallylphthalat, Glycidylallylmalonat.

Die Komponente B) ist ebenfalls durch Copolymerisation von

b1) 5 bis 30 Gew.-%, bevorzugt 5 bis 25 Gew.-%, Monomeren mit mindestens zwei polymerisierbaren, olefinisch ungesättigten Doppelbindungen,

b4) 5 bis 50 Gew.-%, bevorzugt 10 bis 40 Gew.-%, Monomeren mit mindestens einer polymerisierbaren Doppelbindung und einer funktionellen Gruppe F,

b3) weiteren polymerisierbaren Monomeren, wobei die Summe von b1) bis b3) 100 Gew.-% beträgt,

in einem organischen Lösungsmittel bei 70 bis 130° C, vorzugsweise bei 80° bis 120° C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert,
und aus

b5) einer organischen Verbindung mit mindestens einer Epoxidgruppe und einer zur funktionellen Gruppe F der Monomeren aus b4) reaktiven Gruppe.

Als Komponente b4) und b5) kommen Monomere mit einer Isocyanatgruppe (b4), wie Isocyanatoethylmethacrylat und Isocyanatobutylmethacrylat sowie Epoxypropanol (b5) oder auch Carbonsäuremonomere (b4) und Di- oder Polyepoxidverbindungen (b5) in Frage.

Bei Verwendung carboxylgruppenhaltiger Monomerer als Komponente b4 wird bevorzugt anteilig β-Carboxyethylacrylat eingesetzt. Vorteilhafterweise ist das carboxylgruppenhaltige Monomer anteilig ein Monomer mit Phosphorsäuregruppen.

Die vorvernetzten löslichen Acrylatcopolymerisate A) bzw. B) werden hergestellt, indem die Monomeren in einem organischen Lösungsmittel bei 70 bis 120° C, vorzugsweise bei 80 bis 120° C, unter Verwendung von mindestens 0,5 Gew.-%, vorzugsweise mindestens 2,5 Gew.-%, bezogen auf das Gesamtgewicht der Monomeren, eines Polymerisationsreglers und unter VerWendung von Polymerisationsinitiatoren zu einem vorvernetzten, verzweigten, aber nicht gelierten Produkt copolymerisiert werden. Gegebenenfalls kann nach der radikalischen Copolymerisation die Umsetzung mit den cyclischen Carbonsäureanhydriden, die Umsetzung mit den Verbindungen, die sowohl mindestens einen mit Säureanhydridgruppen reaktionsfähigen Wasserstoff als auch mindestens eine tertiäre Aminogruppe enthalten sowie ggf. mit monofunktionellen Verbindungen mit aktivem Wasserstoff oder auch die Umsetzung mit den sekundären Aminen oder den Di- oder Polyaminen mit mindestens einer tertiären Aminogruppe und einer primären oder sekundären Aminogruppe und/oder mit Carbonsäuren, die einen tertiären Stickstoff enthalten sowie mit den cyclischen Carbonsäureanhydriden oder ggf. mit den Monoisocyanaten, welche eine tertiäre Stickstoffgruppe im Molekül enthalten oder auch nach der Copolymerisation mit den Monoisocyanaten, die eine tertiäre

Stickstoffgruppe im Molekül enthalten und die Umsetzung mit cyclischen Carbonsäureanhydriden oder die Umsetzung einer Verbindung mit mindestens einer Epoxidgruppe und einer zur funktionellen Gruppe F des Monomeren b4) reaktiven Gruppe erfolgen.

Es ist bei der Herstellung des Acrylatcopolymerisats darauf zu achten, daß ein vorvernetztes, aber nicht geliertes Copolymerisat erhalten wird. Durch geeignete Polymerisationsbedingungen läßt sich überraschenderweise eine klare, transparente, nicht gelierte Lösung eines verzweigten Copolymerisats herstellen. Durch die Verwendung von Monomeren mit mindestens zwei ethylenisch ungesättigten Gruppen wird eine Vorvernetzung der Copolymerisatmoleküle hervorgerufen, die aufgrund der erfindungsgemäßen speziellen Reaktionsbedingungen trotzdem nicht zu gelierten Produkten führt.

Die Polymerisation wird so durchgeführt, daß eine Lösung des Polymerisats mit einem Festkörpergehalt von 40 bis 65 Gew.-% resultiert. Der Festkörpergehalt ist abhängig von dem Anteil an einpolymerisierten, mehrfach ethylenisch ungesättigten Monomeren. Ist dieser Anteil niedrig, so kann bei höheren Festkörpergehalten polymerisiert werden. Weiterhin ist es notwendig, geeignete Initiatoren und, je nach dem Anteil an difunktionellem Monomer, mindestens 0,5 Gew.-%, vorzugsweise jedoch mindestens 2,5 Gew.-%, eines Polymerisationsreglers einzusetzen. Die Auswahl des Initiators richtet sich nach dem Anteil der eingesetzten difunktionellen Monomeren. Bei niedrigem Anteil kann man die für solche Temperaturen üblichen Initiatoren, wie z.B. Peroxyester, verwenden. Bei höherem Anteil an difunktionellem Monomer werden vorzugsweise Initiatoren, wie z.B. Azoverbindungen, eingesetzt. Nach der Polymerisation wird die Polymerisatlösung durch Abdestillieren von Lösungsmittel auf den gewünschten Festkörpergehalt konzentriert, vorzugsweise auf Festkörpergehalte von 60 Gew.-%. Die so erhaltenen klaren Copolymerisatlösungen besitzen, auf einen Festkörpergehalt von 50 Gew.-% eingestellt, eine Viskosität von 0,4 bis 10 dPas.

Die Polymerisation wird in Gegenwart eines organischen Lösungsmittels durchgeführt. Beispiele sind Ethanol, Isopropanol, n-Propanol, n-Butanol, Isobutanol, t-Butanol, Methyl-, Ethyl-, Propyl- und Butylester der Essigsäure, Aceton, Methylethylketon, Xylol, Toluol.

Als Polymerisationsregler eignen sich vorzugsweise Mercaptogruppen enthaltende Verbindungen, wobei besonders bevorzugt Mercaptoethanol eingesetzt wird. Andere mögliche Regler sind beispielsweise t-Dodecylmercaptan, Phenylmercaptan, Octyldecylmercaptan, Butylmercaptan und Thiocarbonsäuren, wie etwa Thiomilchsäure.

Es ist zu beachten, daß bei der Herstellung des Acrylatcopolymerisats nach Anspruch 4 als Polymerisationsregler keine Hydroxymercaptane bzw. Mercaptane mit primären SH-Gruppen eingesetzt werden. Bei der Auswahl des Polymerisationsreglers bei der Herstellung der Acrylate nach Anspruch 5, 8 und ggf. 9 ist darauf zu achten, daß keine Thiocarbonsäuren verwendet werden.

Als Komponente C) (Aminoplastharz) kommen Melamin-Formaldehydharze, Harnstoff-Formaldehydharze und Benzoguanaminharze in Frage. Diese können voll- bis teilmethyloliert sein, aber auch noch freie NH-Gruppen enthalten. Es können als Komponente C) teil- und vollveretherte Harze eingesetzt werden. Die Verwendung von mischveretherten Produkten ist oftmals von Vorteil. Als Veretherungsalkohol kommen Methanol, Ethanol, Propanol, Iso-Butanol, n-Butanol, Ethylhexanol in Frage.

Die vorliegende Erfindung betrifft auch ein Verfahren zur Herstellung der härtbaren zuvor beschriebenen Zusammensetzungen, dadurch gekennzeichnet, daß das Polymer mit mindestens zwei Epoxidgruppen B) und das Aminoplastharz C) in organischem Lösungsmittel miteinander vermischt werden und diese Mischung vor der Verarbeitung mit dem COOH-Polymeren A) vermischt wird.

Die Erfindung betrifft auch Überzugsmittel, die dadurch gekennzeichnet sind, daß sie die zuvor beschriebenen härtbaren Zusammensetzungen, ggf. Katalysatoren, organisches Lösungsmittel, ggf. Pigmente und übliche Hilfsstoffe und Additive enthalten.

Wird der Katalysator für die Epoxy-Carboxy-Vernetzung in das Polymer eingebaut, so richtet sich die Menge nach der gewünschten Einbrenntemperatur. Bei höheren Temperaturen wird weniger tertiäres Amin eingebaut, bei niedriger Einbrenntemperatur wird mehr an tertiärem Amin eingebaut.

Zu beachten ist, daß bei Verwendung der Überzüge für Klarlacke vorwiegend aliphatische Amine eingebaut werden, da aromatische Amine oft zu Verfärbungen führen. Selbstverständlich können zusätzlich noch extern Katalysatoren verwendet werden. Geeignete Katalysatoren sind Metallsalze, z.B. Chromverbindungen, Aluminium- und Titanverbindungen.

Die Einbrenntemperaturen der beschriebenen härtbaren Zusammensetzungen liegen im allgemeinen bei 80 bis 180 °C. Durch den Anteil eingebauter Katalysatoren können vorteilhafterweise die Überzugsmittel auf die gewünschte Einbrenntemperatur eingestellt werden.

Die beschriebenen härtbaren Zusammensetzungen führen zu Überzügen, die hervorragende Eigenschaften haben in bezug auf Beständigkeit gegen langfristige Belastung durch Lösemittel, Chemikalien, Wasser bzw. Wasserdampf, Härte und Elastizität.

Außerdem wird ein relativ hoher Festkörpergehalt der härtbaren Überzugsmittel bei relativ geringer

Viskosität erzielt.

Die Überzugsmittel auf Basis der beschriebenen härtbaren Zusammensetzung können verwendet werden als Füller, Decklacke und als Basis- und/oder Klarlack einer Metallic-Mehrschichtlackierung.

Nachfolgend wird die Erfindung anhand von Ausführungsbeispielen näher erläutert:

Die Viskositätswerte wurden auf einem Platte -Kegel-Viskosimeter bei 23 ° Cx bestimmt, die Festkörperwerte wurden in einem Umluftofen bestimmt, wenn nicht anders angegeben, bei 1 Stunde/130 ° C. Die Säurezahlen sind in mg KOH/g Harz angegeben und beziehen sich auf das Festharz. Die Epoxidäquivalentgewichte beziehen sich ebenfalls auf Festharz.

Herstellung erfindungsgemäßer Copolymerisatlösungen.

Herstellung eines verzweigten COOH-Acrylates, A1:

In einem 4 Liter-Edelstahlkessel werden vorgelegt
376,8 Teile Xylol
376,8 Teile Butanol
188,4 Teile Methylisobutylketon

In den Monomerentank werden eingewogen und vermischt 100 Teile Methylmethacrylat
100 Teile n-Butylacrylat
170 Teile tert.-Butylacrylat
100 Teile Ethylhexylacrylat
100 Teile Styrol
200 Teile Hexandioldimethacrylat
200 Teile Acrylsäure
30 Teile Dimethylaminoethylmethacrylat
50 Teile Mercaptoethanol

In den Initiatortank werden eingewogen und vermischt:
36,0 Teile 2,2'-Azobis(2-methylbutannitril)
57,6 Teile Xylol
57,6 Teile Butanol
28,8 Teile Methylisobutylketon

Die Vorlage wird auf 110 ° C aufgeheizt,und innerhalb 3 Stunden wird der Monomerentank gleichmäßig zudosiert, innerhalb von 3,5 Stunden wird der Initiatortank gleichmäßig zudosiert. Beide Zuläufe werden gleichzeitig gestartet. Während der Polymerisation wird die Temperatur auf 110 ° C gehalten, nach Zulaufende wird noch 2,5 Stunden nachpolymerisiert. Die so erhaltene klare Lösung des verzweigten Acrylates hat eine Viskosität von 2,2 dPas (23 ° C), einen Festkörper von 49,6 % und eine Säurezahl von 132,6.

Herstellung eines glycidylgruppenhaltigen Acrylates B1:

In einem 4 Liter-Edelstahlkessel werden vorgelegt und auf 110 ° C aufgeheizt:
282,9 Teile Xylol
565,8 Teile 1-Methoxypropyl-2-acetat

Zulauf 1:

270 Teile Glycidylmethacrylat

Zulauf 2:

135 Teile Methylmethacrylat
90 Teile Styrol
180 Teile n-Butylacrylat
135 Teile Hexandioldiacrylat
45 Teile Ethylhexylacrylat
45 Teile Hydroxypropylmethacrylat
40,5 Teile Mercaptoethanol

Zulauf 3:

40,8 Teile Xylol
81,6 Teile 1-Methoxypropyl-2-acetat
30,6 Teile 2,2'-Azobis(2-methylbutannitril)

Die Zuläufe 1, 2 und 3 werden gleichzeitig gestartet; Zulauf 1 wird 2,5 Stunden zudosiert, Zulauf 2 wird 3 Stunden zudosiert, Zulauf 3 wird 3,5 Stunden zudosiert. Während der Polymerisation wird die Temperatur auf 110 °C gehalten, danach wird noch 3 Stunden bei 110 °C nachpolymerisiert. Danach werden 330 Teile Lösungsmittelgemisch abdestilliert. Die so erhaltene klare Lösung des glycidylgruppenhaltigen Acrylatharzes hat einen Festkörper von 58,8 %, eine Viskosität von 8,0 dPas und ein Epoxidäquivalentgewicht von 561.

Herstellung des glycidylgruppenhaltigen Acrylats B2:

In einem 4 Liter-Edelstahlkessel werden vorgelegt und auf 110 °C aufgeheizt:
282,9 Teile Xylol
565,8 Teile 1-Methoxypropyl-2-acetat

In die einzelnen Zulauftanks werden eingewogen und gemischt:

Zulauf 1:

270 Teile Glycidylmethacrylat

Zulauf 2:

45 Teile Hydroxypropylmethacrylat

Zulauf 3:

135 Teile Methylmethacrylat
90 Teile Styrol
180 Teile n-Butylacrylat
135 Teile Hexandioldiacrylat
45 Teile Ethylhexylacrylat
40,5 Teile Mercaptoethanol

Zulauf 4:

40,8 Teile Xylol 81,6 Teile 1-Methoxypropyl-2-acetat
30,6 Teile 2,2'-Azobis(2-methylbutannitril)

Die Zuläufe 1, 3 und 4 werden gleichzeitig gestartet. Zulauf 1 wird 2,5 Stunden zudosiert, Zulauf 3 wird 3 Stunden zudosiert, Zulauf 4 wird 3,5 Stunden zudosiert. Zulauf 2 wird nach Ende von Zulauf 1 gestartet und 0,5 Stunden zudosiert. Während der Polymerisation wird die Temperatur auf 110 °C gehalten, danach wird noch 3 Stunden nachpolymerisiert. Es werden 326 Teile des Lösungsmittelgemisches abdestilliert. Die so erhaltene klare Acrylatharzlösung hat einen Festkörper von 59,2 %, eine Viskosität von 9,5 dPas und ein Epoxidäquivalentgewicht von 553.

Klarlack 1:

91,7 Teile der erfindungsgemäßen Harzlösung B2 werden mit 13,8 Teilen eines Methanaol/Butanol-mischveretherten Melaminharzes (Cymel® 1130) vermischt und dann mit 85,14 Teilen der Acrylatharzlösung A1 zusammengegeben.

Klarlack 2:

94,12 Teile der Harzlösung B1 werden mit 14 Teilen eines Butanol-teilveretherten Melaminharzes (Cymel® 1158) vermischt, dann werden 85,14 Teile der COOH-Acrylatlösung A1 zugegeben.

Die Lacke werden mit wenig Pentanol verdünnt und mit 100 µm Naßfilmstärke auf Glasplatten aufgerakelt. Die Filme werden 30 Minuten bei 120 °C eingebrannt.

Klarlack 1:

2 Stunden nach Ofen:
Pendelhärte 120,4 Sekunden, 5 Minuten Superbenzin i.O.

Klarlack 2:

2 Stunden nach Ofen:
Pendelhärte 187,6 Sekunden, 5 Minuten Superbenzin f.i.O.

**Patentansprüche**

**1.** Härtbare Zusammensetzung, bestehend aus:

A) einem Polymeren mit mindestens zwei COOH-Gruppen,
B) einem Polymeren mit mindestens zwei Epoxidgruppen und
C) einem Aminoplastharz,

dadurch gekennzeichnet, daß als Komponente A) ein lösliches verzweigtes Acrylatcopolymerisat eingesetzt wird, welches erhältlich ist durch Copolymerisation von

a1) 5 bis 30 Gew.-% eines Monomeren mit mindestens zwei polymerisierbaren, olefinisch ungesättigten Doppelbindungen,
a2) 3 bis 50 Gew.-% eines carboxylgruppenhaltigen Monomeren und
a3) mindestens 40 Gew.-% weiterer Monomeren mit einer polymerisierbaren, olefinisch ungesättigten Doppelbindung,

wobei die Summe von a1), a2), a3) 100 Gew.-% beträgt, in einem organischen Lösungsmittel bei 70 bis 130 °C, vorzugsweise bei 80° bis 120 °C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert, wobei die Mengenverhältnisse der einzelnen Komponenten so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

**2.** Härtbare Zusammensetzung, bestehend aus:

A) einem Polymeren mit mindestens zwei COOH-Gruppen,
B) einem Polymeren mit mindestens zwei Epoxidgruppen und
C) einem Aminoplastharz,

dadurch gekennzeichnet, daß als Komponente A) ein lösliches verzweigtes Acrylatcopolymerisat eingesetzt wird, welches erhältlich ist durch Copolymerisation von

a1) 5 bis 30 Gew.-% eines Monomeren mit mindestens zwei polymerisierbaren, olefinisch ungesättigten Doppelbindungen, wobei Di- und Polyester von Di- und Polyolen mit Acrylsäure ausgenommen sind,
a2) 3 bis 50 Gew.-% eines carboxylgruppenhaltigen Monomeren
a4) 0,1 bis 20 Gew.-% eines tertiären Amins mit einer polymerisierbaren, olefinisch ungesättigten Doppelbindung,
a5) 0 bis 40 Gew.-% eines hydroxylgruppenhaltigen Monomeren und
a3) 0 bis 80 Gew.-% weiterer Monomeren mit einer polymerisierbaren, olefinisch ungesättigten Doppelbindung, wobei die Summe der Komponenten a1), a2), a3), a4) und a5) 100 Gew.-% beträgt,

in einem organischen Lösungsmittel bei 70 bis 130 °C, vorzugsweise bei 80° bis 120 °C, unter

Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert, wobei die Mengenverhältnisse der einzelnen Komponenten zueinander so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

**3.** Härtbare Zusammensetzung, bestehend aus:

A) einem Polymeren mit mindestens zwei COOH-Gruppen,
B) einem Polymeren mit mindestens zwei Epoxidgruppen und
C) einem Aminoplastharz,

dadurch gekennzeichnet, daß als Komponente A) ein lösliches verzweigtes Acrylatcopolymerisat eingesetzt wird, welches erhältlich ist durch Copolymerisation von

a1) 5 bis 30 Gew.-% eines Monomeren mit mindestens zwei polymerisierbaren, olefinisch ungesättigten Doppelbindungen, wobei Di- und Polyester von Di- und Polyolen mit Acrylsäure ausgenommen sind,
a4) 0,1 bis 20 Gew.-% eines tertiären Amins mit einer polymerisierbaren, olefinisch ungesättigten Doppelbindung,
a5) 5 bis 40 Gew.-% hydroxylgruppenhaltiger Monomerer,
a3) 0 bis 80 Gew.-% weiterer Monomeren mit einer polymerisierbaren, olefinisch ungesättigten Doppelbindung,

wobei die Summe der Komponenten a1), a3), a4) und a5) 100 Gew.-% beträgt,

in einem organischen Lösungsmittel bei 70 bis 130°C, vorzugsweise bei 80° bis 120°C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert,

und aus

a6) cyclischen Carbonsäureanhydriden,

wobei die Mengenverhältnisse der einzelnen Komponenten zueinander so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 bis 98 : 2 Gew.-% herrscht.

**4.** Härtbare Zusammensetzung, bestehend aus:

A) einem Polymeren mit mindestens zwei COOH-Gruppen,
B) einem Polymeren mit mindestens zwei Epoxidgruppen und
C) einem Aminoplastharz,

dadurch gekennzeichnet, daß als Komponente A) ein lösliches verzweigtes Acrylatcopolymerisat eingesetzt wird, welches erhältlich ist durch Copolymerisation von

a1) 5 bis 30 Gew.-% eines Monomeren mit mindestens zwei polymerisierbaren, olefinisch ungesättigten Doppelbindungen,
a7) 1 bis 30 Gew.-% Monomeren mit cyclischen Carbonsäureanhydridgruppen,
a3) 45 bis 80 Gew.-% weiterer polymerisierbarer Monomeren mit einer polymerisierbaren, olefinisch

ungesättigten Doppelbindung,

wobei die Summe der Komponenten a1), a3), und a7) 100 Gew.-% beträgt, in einem organischen Lösungsmittel bei 70 bis 130 °C, vorzugsweise bei 800 bis 120 °C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert, und aus

a8) Verbindungen, die sowohl mindestens einen mit Säureanhydridgruppen reaktionsfähigen Wasserstoff als auch mindestens eine tertiäre Aminogruppe enthalten,

wobei ein Teil der Carbonsäureanhydridgruppen auch mit einer monofunktionellen Verbindung mit aktivem Wasserstoff umgesetzt werden kann und die Mengenverhältnisse der einzelnen Komponenten zueinander so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

**5.** Härtbare Zusammensetzung, bestehend aus:

A) einem Polymeren mit mindestens zwei COOH-Gruppen,
B) einem Polymeren mit mindestens zwei Epoxidgruppen und
C) einem Aminoplastharz,

dadurch gekennzeichnet, daß als Komponente A) ein lösliches verzweigtes Acrylatcopolymerisat eingesetzt wird, welches erhältlich ist durch Copolymerisation von

a1) 5 bis 30 Gew.-% eines Monomeren mit mindestens zwei polymerisierbaren, olefinisch ungesättigten Doppelbindungen,
a9) 1 bis 30 Gew.-% von Glycidylestern von ethylenisch ungesättigten Carbonsäuren und/oder Glycidylethern von olefinisch ungesättigten Verbindungen,
a3) mindestens 40 Gew.-% weiterer polymerisierbarer Monomeren mit einer olefinisch ungesättigten Doppelbindung,

wobei die Summe aller Monomeren 100 Gew.-% beträgt,

in einem organischen Lösungsmittel bei 70 bis 130 °C, vorzugsweise bei 80° bis 120 °C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert,

und aus

a10) Aminen mit einer sekundären Aminogruppe oder Di- oder Polyaminen mit mindestens einer tertiären Aminogruppe und einer primären oder sekundären Aminogruppe und/oder
a11) Carbonsäuren, die ein tertiäres Stickstoffatom enthalten, und aus
a6) cyclischen Carbonsäureanhydriden,

wobei die Mengenverhältnisse der einzelnen Komponenten zueinander so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 bis 98 : 2 Gew.-% herrscht.

**6.** Härtbare Zusammensetzung, bestehend aus:

A) einem Polymeren mit mindestens zwei COOH-Gruppen,

B) einem Polymeren mit mindestens zwei Epoxidgruppen und
C) einem Aminoplastharz,

dadurch gekennzeichnet, daß als Komponente A) ein lösliches verzweigtes Acrylatcopolymerisat eingesetzt wird, welches erhältlich ist durch Copolymerisation von

a1) 5 bis 30 Gew.-% eines Monomeren mit mindestens zwei polymerisierbaren, olefinisch ungesättigten Doppelbindungen,
a2) 3 bis 50 Gew.-% eines carboxylgruppenhaltigen Monomeren und
a5) 0 bis 40 Gew.-% eines hydroxylgruppenhaltigen Monomeren und
a3) 0 bis 80 Gew.-% weiterer Monomeren mit einer polymerisierbaren, olefinisch ungesättigten Doppelbindung,

wobei die Summe von a1), a2), a3) und a5) 100 Gew.-% beträgt, in einem organischen Lösungsmittel bei 70 bis 130° C, vorzugsweise bei 80° bis 120° C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert,

und aus

a12) Monoisocyanaten mit einer tertiären Aminogruppe im Molekül,

wobei die Mengenverhältnisse der einzelnen Komponenten so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

7. Härtbare Zusammensetzung, bestehend aus:

A) einem Polymeren mit mindestens zwei COOH-Gruppen,
B) einem Polymeren mit mindestens zwei Epoxidgruppen und
C) einem Aminoplastharz,

dadurch gekennzeichnet, daß als Komponente A) ein lösliches verzweigtes Acrylatcopolymerisat eingesetzt wird, welches erhältlich ist durch Copolymerisation von

a1) 5 bis 30 Gew.-% eines Monomeren mit mindestens zwei polymerisierbaren, olefinisch ungesättigten Doppelbindungen,
a2) 0 bis 40 Gew.-% eines carboxylgruppenhaltigen Monomeren und
a5) 8 bis 50 Gew.-% hydroxylgruppenhaltiger Monomeren,
a3) 0 bis 80 Gew.-% weiterer polymerisierbarer Monomeren mit einer olefinisch ungesättigten Doppelbindung,

wobei die Summe von a1), a2), a3) und a5) 100 Gew.-% beträgt,in einem organischen Lösungsmittel bei 70 bis 130° C, vorzugsweise bei 800 bis 120° C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert,

und aus

a12) Monoisocyanaten mit einer tertiären Aminogruppe im Molekül,
a6) cyclischen Carbonsäureanhydriden,

wobei die Mengenverhältnisse der einzelnen Komponenten so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

**8.** Härtbare Zusammensetzung, bestehend aus:

A) einem Polymeren mit mindestens zwei COOH-Gruppen,
B) einem Polymeren mit mindestens zwei Epoxidgruppen und
C) einem Aminoplastharz,

dadurch gekennzeichnet, daß als Komponente B) ein lösliches verzweigtes Acrylatcopolymerisat eingesetzt wird, welches erhältlich ist durch Copolymerisation von

b1) 5 bis 30 Gew.-% eines Monomeren mit mindestens zwei polymerisierbaren, olefinisch ungesättigten Doppelbindungen,
b2) 5 bis 50 Gew.-% Monomeren mit einer Epoxidgruppe,
b3) mindestens 10 Gew.-% weiterer Monomeren mit einer polymerisierbaren, olefinisch ungesättigten Doppelbindung,

wobei die Summe von b1), b2), b3) 100 Gew.-% beträgt, in einem organischen Lösungsmittel bei 70 bis 130 °C, vorzugsweise bei 80° bis 120 °C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert, wobei die Mengenverhältnisse der einzelnen Komponenten so gewählt werden, daß zwischen den Carboxylgruppen der Komponente A) und den Epoxidgruppen der Komponente B) ein molares Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

**9.** Härtbare Zusammensetzung, bestehend aus:

A) einem Polymeren mit mindestens zwei COOH-Gruppen,
B) einem Polymeren mit mindestens zwei Epoxidgruppen und
C) einem Aminoplastharz,

dadurch gekennzeichnet, daß als Komponente B) ein lösliches verzweigtes Acrylatcopolymerisat eingesetzt wird, welches erhältlich ist durch Copolymerisation von

b1) 5 bis 30 Gew.-% Monomeren mit mindestens zwei polymerisierbaren, olefinisch ungesättigten Doppelbindungen,
b4) 5 bis 50 Gew.-% Monomeren mit mindestens einer polymerisierbaren Doppelbindung und einer funktionellen Gruppe F,
b3) weiteren polymerisierbaren Monomeren,

wobei die Summe von b1), b4) und b3) 100 Gew.-% beträgt,in einem organischen Lösungsmittel bei 70 bis 130 °C, vorzugsweise bei 80° bis 120 °C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren, wobei die Polymerisation zur Herstellung des Acrylatcopolymerisats so durchgeführt wird, daß eine Lösung des Polymerisats mit einem Festkörpergehalt von 40 bis 65 Gew.-% resultiert, und aus

b5) einer organischen Verbindung mit mindestens einer Epoxidgruppe und einer zur funktionellen Gruppe F der Monomeren aus b4) reaktiven Gruppe,

wobei die Mengenverhältnisse der einzelnen Komponenten so gewählt werden, daß zwischen den Carboxylgruppen der Komponente A) und den Epoxidgruppen der Komponente B) ein molares

Verhältnis von 3 : 1 bis 1 : 3 herrscht und daß zwischen der Epoxidharzkomponente und der Aminoplastharzkomponente ein Gewichtsverhältnis von 65 : 35 Gew.-% bis 98 : 2 Gew.-% herrscht.

**10.** Härtbare Zusammensetzung nach Anspruch 1, 4, 5, 6, 7, 8 oder 9, dadurch gekennzeichnet, daß die Komponente

a1) bzw. b1) der allgemeinen Formel

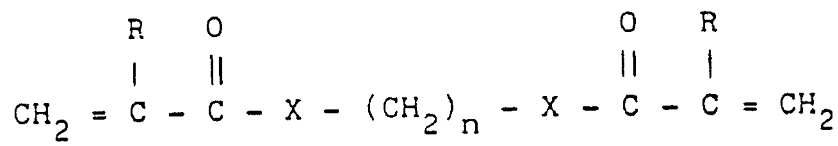

entspricht, in der bedeuten:
R = H oder $CH_3$
X = O, NR', S mit R' = H, Alkyl, Aryl
n = 2 bis 8.

**11.** Härtbare Zusammensetzung nach Anspruch 2 oder 3, dadurch gekennzeichnet, daß die Komponente a1) der Formel

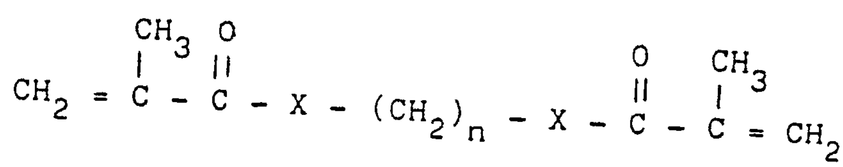

entspricht, in der bedeuten:

X = 0, NR', S mit R' = H, Alkyl, Aryl

n = 2 bis 8

oder eine Divinylverbindung ist.

**12.** Härtbare Zusammensetzung nach Anspruch 1, 4, 5, 6, 7, 8 oder 9, dadurch gekennzeichnet, daß die Komponente a1) bzw. b1) ein Monomer mit mindestens zwei polymerisierbaren, olefinisch ungesättigten Doppelbindungen ist, wobei dieses Monomer ein Umsetzungsprodukt aus einer Carbonsäure mit einer polymerisierbaren Doppelbindung und Glycidylacrylat und/oder Glycidylmethacrylat ist oder wobei dieses Monomer eine mit einem ungesättigten, eine polymerisierbare Doppelbindung enthaltenden Alkohol veresterte Polycarbonsäure oder ungesättigte Monocarbonsäure ist oder wobei dieses Monomer ein Umsetzungsprodukt von Polyisocyanaten mit ungesättigten, polymerisierbare Doppelbindungen enthaltenden Alkoholen oder Aminen ist.

**13.** Härtbare Zusammensetzung nach Anspruch 1, 2, 6 oder 7, dadurch gekennzeichnet, daß das carboxylgruppenhaltige Monomer (a2) zumindest anteilig $\beta$ -Carboxyethylacrylat ist.

**14.** Härtbare Zusammensetzung nach Anspruch 1, 2, 6 oder 7, dadurch gekennzeichnet, daß das carboxylgruppenhaltige Monomer (a2) anteilig ein Monomer mit Phosphorsäuregruppen ist.

**15.** Härtbare Zusammensetzung nach einem der Ansprüche 1 bis 14, dadurch gekennzeichnet, daß die weiteren polymerisierbaren Monomeren mit einer olefinisch ungesättigten Doppelbindung (a3) bzw. (b3)

ausgewählt sind aus der Gruppe Styrol, Vinyltoluol, Alkylester der Acrylsäure und Methacrylsäure, Alkoxyalkylacrylate und Aryloxyalkylacrylate und der entsprechenden Methacrylate, Ester der Malein-, Fumar-, Croton- und Dimethylacrylsäure.

16. Verfahren zur Herstellung der härtbaren Zusammensetzung nach einem der Ansprüche 1 bis 15, dadurch gekennzeichnet, daß das Polymer mit mindestens zwei Epoxidgruppen B) und das Aminoplastharz C) in Organischem Lösungsmittel miteinander vermischt werden und diese Mischung vor der Verarbeitung mit dem COOH-Polymeren A) vermischt wird.

17. Überzugsmittel, dadurch gekennzeichnet, daß es die härtbare Zusammensetzung nach einem der Ansprüche 1 bis 15, ggf. Katalysatoren, organisches Lösungsmittel, ggf. Pigmente und übliche Hilfsstoffe und Additive enthält.

## Claims

1. A curable composition consisting of:
   A) a polymer with at least two COOH groups,
   B) a polymer with at least two epoxide groups and
   C) an aminoplast resin,

   characterised in that a soluble branched acrylate copolymer is used as component A) which is obtainable by the copolymerisation of
   a1) 5 to 30% by weight of a monomer with at least two polymerisable, olefinically double bonds,
   a2) 3 to 50% by weight of a monomer containing carboxyl groups and
   a3) at least 40% by weight of other monomers with a polymerisable, olefinically unsaturated double bond, the sum of a1), a2), a3) being 100% by weight, in an

   organic solvent at 70 to 130 °C, preferably at 80 ° to 120 °C, using at least 0.5% by weight, preferably at least 2.5% by weight, relative to the total weight of the monomers, of a polymerisation regulator, and using polymerisation initiators, where the polymerisation for preparing the acrylate copolymer is carried out in such a way that a solution of the polymer results which contains 40 to 65% by weight of solids, and the proportions of the individual components relative to one another being chosen so that a molar ratio of 3:1 to 1:3 prevails between the carboxyl groups of component A) and the epoxide groups of component B), and a weight ratio of 65:35% by weight to 98:2% by weight prevails between the epoxy resin component and the aminoplast resin component.

2. A curable composition consisting of
   A) a polymer having at least two COOH groups,
   B) a polymer having at least two epoxide groups, and
   C) an aminoplast resin,

   characterised in that a soluble branched acrylate copolymer which is obtainable by copolymerisation of
   a1) 5 to 30% by weight of a monomer with at least two polymerisable olefinically unsaturated double bonds, di- and polyesters of di- and polyols with acrylic acid being excluded,
   a2) 3 to 50% by weight of a monomer containing carboxyl groups,
   a4) 0.1 to 20% by weight of a tertiary amine with a polymerisable olefinically unsaturated double bond,
   a5) 0 to 40% by weight of a monomer containing hydroxyl groups and
   a3) 0 to 80% by weight of other monomers with a polymerisable olefinically unsaturated double bond,

   the sum of components a1), a2), a3), a4) and a5) being 100% by weight, in an organic solvent at 70 to 130 °C, preferably at 80 ° to 120 °C, using at least 0.5% by weight, preferably at least 2.5% by weight, relative to the total weight of the monomers, of a polymerisation regulator, and using polymerisation initiators, where the polymerisation for preparing the acrylate copolymer is carried out in such a way that a solution of the polymer results which contains 40 to 65% by weight of solids, the proportions of the individual components relative to one another being chosen so that a molar ratio of 3:1 to 1:3 prevails between the carboxyl groups of component A) and the epoxide groups of component B), and a weight ratio of 65:35% by weight to 98:2% by weight prevails between the epoxy resin component and the aminoplast resin component is used as component A).

3. A curable composition consisting of

A) a polymer having at least two COOH groups,
B) a polymer having at least two epoxide groups, and
C) an aminoplast resin,

characterised in that a soluble branched acrylate copolymer which is obtainable by copolymerisation of

a1) 5 to 30% by weight of a monomer with at least two polymerisable, olefinically unsaturated double bonds, di- and polyesters of di- and polyols with acrylic acid being excluded,
a4) 0.1 to 20% by weight of a tertiary amine with a polymerisable, olefinically unsaturated double bond,
a5) 5 to 40% by weight of monomers containing hydroxyl groups,
a3) 0 to 80% by weight of other monomers with a polymerisable olefinically unsaturated double bond,

the sum of components a1), a3), a4) and a5) being 100% by weight, in an organic solvent at 70 to 130°C, preferably at 80° to 120°C, using at least 0.5% by weight, preferably at least 2.5% by weight, relative to the total weight of the monomers, of a polymerisation regulator, and using polymerisation initiators, where the polymerisation for preparing the acrylate copolymer is carried out in such a way that a solution of the polymer results which contains 40 to 65% by weight of solids, and

a6) cyclic carboxylic acid anhydrides,

the proportions of the individual components relative to one another being chosen so that a molar ratio of 3:1 to 1:3 prevails between the carboxyl groups of component A) and the epoxide groups of component B), and a weight ratio of 65:35% by weight to 98:2% by weight prevails between the epoxy resin component and the aminoplast resin component is used as component A).

**4.** A curable composition consisting of

A) a polymer having at least two COOH groups,
B) a polymer having at least two epoxide groups, and
C) an aminoplast resin,

characterised in that a soluble branched acrylate copolymer which is obtainable by copolymerisation of

a1) 5 to 30% by weight of a monomer with at least two polymerisable, olefinically unsaturated double bonds,
a7) 1 to 30% by weight of monomers with cyclic carboxylic acid anhydride groups and
a3) 45 to 80% by weight of other polymerisable monomers with a polymerisable olefinically unsaturated double bond,

the sum of components a1), a3) and a7) being 100% by weight, in an organic solvent at 70 to 130°C, preferably at 80° to 120°C, using at least 0.5% by weight, preferably at least 2.5% by weight, relative to the total weight of the monomers, of a polymerisation regulator, and using polymerisation initiators, where the polymerisation for preparing the acrylate copolymer is carried out in such a way that a solution of the polymer results which contains 40 to 65% by weight of solids, and

a8) compounds which contain both at least one hydrogen atom which can react with acid anhydride groups and at least one tertiary amino group,

it also being possible for some of the carboxylic acid anhydride groups to be reacted with a monofunctional compound with active hydrogen, the proportions of the individual components relative to one another being chosen so that a molar ratio of 3:1 to 1:3 prevails between the carboxyl groups of component A) and the epoxide groups of component B), and a weight ratio of 65:35% by weight to 98:2% by weight prevails between the epoxy resin component and the aminoplast resin component is used as component A).

**5.** A curable composition consisting of

A) a polymer having at least two COOH groups,
B) a polymer having at least two epoxide groups, and
C) an aminoplast resin,

characterised in that a soluble branched acrylate copolymer which is obtainable by copolymerisation of

a1) 5 to 30% by weight of a monomer with at least two polymerisable, olefinically unsaturated double bonds,
a9) 1 to 30% by weight of glycidyl esters of ethylenically unsaturated carboxylic acids and/or glycidyl ethers of olefinically unsaturated compounds,
a3) at least 40% by weight of other polymerisable monomers with an olefinically unsaturated double bond,

the sum of all the monomers being 100% by weight, in an organic solvent at 70 to 130°C, preferably at

80° to 120°C, using at least 0.5% by weight, preferably at least 2.5% by weight, relative to the total weight of the monomers, of a polymerisation regulator, and using polymerisation initiators, where the polymerisation for preparing the acrylate copolymer is carried out in such a way that a solution of the polymer results which contains 40 to 65% by weight of solids, and

a10) amines with a secondary amino group or di- or polyamines with at least one tertiary amino group and one primary or secondary amino group and/or

a11) carboxylic acids which contain a tertiary nitrogen atom, and

a6) cyclic carboxylic acid anhydrides, the proportions of the individual components relative to one another being chosen so that a molar ratio of 3:1 to 1:3 prevails between the carboxyl groups of component A) and the epoxide groups of component B), and a weight ratio of 65:35% by weight to 98:2% by weight prevails between the epoxy resin component and the aminoplast resin component is used as component A).

**6.** A curable composition consisting of

A) a polymer having at least two COOH groups,

B) a polymer having at least two epoxide groups, and

C) an aminoplast resin,

characterised in that a soluble branched acrylate copolymer which is obtainable by copolymerisation of

a1) 5 to 30% by weight of a monomer with at least two polymerisable olefinically unsaturated double bonds,

a2) 3 to 50% by weight of a monomer containing carboxyl groups, and

a5) 0 to 40% by weight of a monomer containing hydroxyl groups and

a3) 0 to 80% by weight of other monomers with a polymerisable, olefinically unsaturated double bond, the sum of a1), a2), a3) and a5) being 100% by weight, in an organic solvent at 70 to 130°C, preferably at 80° to 120°C, using at least 0.5% by weight, preferably at least 2.5% by weight, relative to the total weight of the monomers, of a polymerisation regulator, and using polymerisation initiators, where the polymerisation for preparing the acrylate copolymer is carried out in such a way that a solution of the polymer results which contains 40 to 65% by weight of solids, and

a12) monoisocyanates with a tertiary amino group in the molecule, the proportions of the individual components relative to one another being chosen so that a molar ratio of 3:1 to 1:3 prevails between the carboxyl groups of component A) and the epoxide groups of component B), and a weight ratio of 65:35% by weight to 98:2% by weight prevails between the epoxy resin component and the aminoplast resin component is used as component A).

**7.** A curable composition consisting of

A) a polymer having at least two COOH groups,

B) a polymer having at least two epoxide groups, and

C) an aminoplast resin,

characterised in that a soluble, branched acrylate copolymer which is obtainable by copolymerisation of

a1) 5 to 30% by weight of a monomer with at least 2 polymerisable, olefinically unsaturated double bonds,

a2) 0 to 40% by weight of a monomer containing carboxyl groups,

a5) 8 to 50% by weight of monomers containing hydroxyl groups,

a3) 0 to 80% by weight of other polymerisable monomers with an olefinically unsaturated double bond, the sum of a1), a2), a3) and a5) being 100% by weight in an

organic solvent at 70 to 130°C, preferably at 80° to 120°C, using at least 0.5% by weight, preferably at least 2.5% by weight, relative to the total weight of the monomers, of a polymerisation regulator, and using polymerisation initiators, where the polymerisation for preparing the acrylate copolymer is carried out in such a way that a solution of the polymer results which contains 40 to 65% by weight of solids and

a12) monoisocyanates with a tertiary amino group in the molecule and

a6) cyclic carboxylic acid anhydrides, the proportions of the individual components relative to one another being chosen so that a molar ratio of 3:1 to 1:3 prevails between the carboxyl groups of component A) and the epoxide groups of component B), and a weight ratio of 65:35% by weight to 98:2% by weight prevails between the epoxy resin component and the aminoplast resin component is used as component A).

**8.** A curable composition consisting of

A) a polymer having at least two COOH groups,
B) a polymer having at least two epoxide groups, and
C) an aminoplast resin,

characterised in that a soluble, branched acrylate copolymer which is obtainable by copolymerisation of
b1) 5 to 30% by weight of a monomer with at least two polymerisable, olefinically unsaturated double bonds,
b2) 5 to 50% by weight of monomers with an epoxide group,
b3) at least 10% by weight of other monomers with a polymerisable, olefinically unsaturated double bond,

the sum of b1), b2) and b3) being 100% by weight, in an organic solvent at 70 to 130°C, preferably at 80° to 120°C, using at least 0.5% by weight, preferably at least 2.5% by weight, relative to the total weight of the monomers, of a polymerisation regulator, and using polymerisation initiators, where the polymerisation for preparing the acrylate copolymer is carried out in such a way that a solution of the polymer results which contains 40 to 65% by weight of solids, the proportions of the individual components relative to one another being chosen so that a molar ratio of 3:1 to 1:3 prevails between the carboxyl groups of component A) and the epoxide groups of component B), and a weight ratio of 65:35% by weight to 98:2% by weight prevails between the epoxy resin component and the aminoplast resin component is used as component B).

**9.** A curable composition consisting of
A) a polymer having at least two COOH groups,
B) a polymer having at least two epoxide groups, and
C) an aminoplast resin,

characterised in that a soluble, branched acrylate copolymer which is obtainable by copolymerisation of
b1) 5 to 30% by weight of monomers with at least two polymerisable, olefinically unsaturated double bonds,
b4) 5 to 50% by weight of monomers with at least one polymerisable double bond and one functional group F,
b3) other polymerisable monomers, the sum of b1), b4) and b3) being 100% by weight, in an organic solvent at 70 to 130°C, preferably at 80° to 120°C, using at least 0.5% by weight, preferably at least 2.5% by weight, relative to the total weight of the monomers, of a polymerisation regulator, and using polymerisation initiators, where the polymerisation for preparing the acrylate copolymer is carried out in such a way that a solution of the polymer results which contains 40 to 65% by weight of solids and
b5) an organic compound with at least one epoxide group and one group which is reactive towards the functional group F of monomers from b4), the proportions of the individual components relative to one another being chosen so that a molar ratio of 3:1 to 1:3 prevails between the carboxyl groups of component A) and the epoxide groups of component B), and a weight ratio of 65:35% by weight to 98:2% by weight prevails between the epoxy resin component and the aminoplast resin component, is used as component B).

**10.** A curable composition according to any one of Claims 1, 4, 5, 6, 7, 8 and 9, characterised in that component a1) or b1) corresponds to the general formula

$$CH_2 = \overset{\overset{R}{|}}{C} - \overset{\overset{O}{\|}}{C} - X - (CH_2)_n - X - \overset{\overset{O}{\|}}{C} - \overset{\overset{R}{|}}{C} = CH_2$$

in which R denotes H or $CH_3$, X denotes O, NR' or S, where R' denotes H, alkyl or aryl, and n denotes 2 to 8.

**11.** A curable composition according to either of Claims 2 and 3, characterised in that component a1) corresponds to the formula

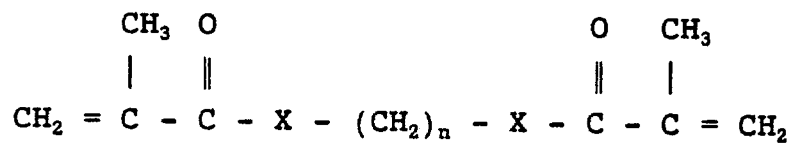

in which X denotes O, NR' or S, where R' denotes H, alkyl or aryl, and n denotes 2 to 8, or is a divinyl compound.

**12.** A curable composition according to any one of Claims 1, 4, 5, 6, 7, 8 and 9, characterised in that component a1) or b1) is a monomer with at least two polymerisable, olefinically unsaturated double bonds, this monomer being a reaction product of a carboxylic acid with a poly-merisable double bond and glycidyl acrylate and/or gly-cidyl methacrylate, or this monomer being a polycarboxy-lic acid or unsaturated monocarboxylic acid esterified with an unsaturated alcohol containing a polymerisable double bond, or this monomer being a reaction product of polyisocyanates with alcohols or amines containing un-saturated, polymerisable double bonds.

**13.** A curable composition according to any one of Claims 1, 2, 6 and 7, characterised in that at least a proportion of the monomer containing carboxyl groups (a2) is $\beta$-carboxy-ethyl acrylate.

**14.** A curable composition according to any one of Claims 1, 2, 6 and 7, characterised in that a proportion of the mono-mer containing carboxyl groups (a2) is a monomer with phosphoric acid groups.

**15.** A curable composition according to any one of Claims 1 to 14, characterised in that the other polymerisable monomers with an olefinically unsaturated double bond (a3) or (b3) are chosen from the group comprising styrene, vinyl-toluene, alkyl esters of acrylic acid and of methacrylic acid, alkoxyalkyl acrylates and aryloxyalxyl acrylates and the corresponding methacrylates, and esters of maleic, fumaric, crotonic and dimethylacrylic acid.

**16.** A process for the preparation of the curable composition according to any one of Claims 1 to 15, characterised in that the polymer with at least two epoxide groups B) and the aminoplast resin C) are mixed with one another in organic solvent and this mixture is mixed with the COOH-polymer A) before processing.

**17.** A coating agent, characterised in that it contains the curable composition according to any one of Claims 1 to 15, if appropriate catalysts, organic solvent, if appropriate pigments and customary auxiliaries and additives.

## Revendications

**1.** Composition durcissable, se composant de :

(A) un polymère ayant au moins deux groupes -COOH ;
(B) un polymère ayant au moins deux groupes époxyde ; et
(C) une résine aminoplaste,

caractérisée par le fait que, comme composant (A), est utilisé un copolymère d'acrylate ramifié soluble, lequel peut être obtenu par copolymérisation de :

a1) 5 à 30% en poids d'un monomère ayant au moins deux doubles liaisons d'insaturation oléfinique, polymérisables ;
a2) 3 à 50% en poids d'un monomère à teneur en groupe carboxyle ; et
a3) au moins 40% en poids d'autres monomères ayant une double liaison d'insaturation oléfinique, polymérisable,

la somme de a1), a2), a3) s'élevant à 100%, dans un solvant organique, à une température de 70 à 130 °C, de préférence, à une température de 80 ° à 120 °C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation en vue de la préparation du copolymère d'acrylate étant conduite de telle sorte qu'il en résulte une solution du polymère ayant une teneur en matières solides de 40 à 65% en poids, les rapports quantitatifs des

composants individuels étant choisis de telle sorte qu'entre les groupes carboxyle du composant (A) et les groupes époxyde du composant (B), il y ait un rapport molaire de 3:1 à 1:3, et qu'entre le composant de résine époxyde et le composant de résine aminoplaste, il y ait un rapport pondéral de 65:35% en poids à 98:2% en poids.

**2.** Composition durcissable, se composant de :

(A) un polymère ayant au moins deux groupes -COOH ;
(B) un polymère ayant au moins deux groupes époxyde ; et
(C) une résine aminoplaste,

caractérisée par le fait que, comme composant (A), est utilisé un copolymère d'acrylate ramifié, soluble, lequel peut être obtenu par copolymérisation de :

a1) 5 à 30% en poids d'un monomère ayant au moins deux doubles liaisons d'insaturation oléfinique, polymérisables, les di- et polyesters de di- et polyols avec l'acide acrylique étant exclus ;
a2) 3 à 50% en poids d'un monomère à teneur en groupe carboxyle ;
a4) 0,1 à 20% en poids d'une amine tertiaire ayant une double liaison d'insaturation oléfinique, polymérisable;
a5) 0 à 40% en poids d'un monomère à teneur en groupe hydroxyle ; et
a3) 0 à 80% en poids d'autres monomères ayant une double liaison d'insaturation oléfinique, polymérisable,

la somme des composants a1), a2), a3), a4) et a5) s'élevant à 100% en poids, dans un solvant organique, à une température de 70 à 130°C, de préférence, à une température de 80° à 120°C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation en vue de la préparation du copolymère d'acrylate étant conduite de telle sorte qu'il en résulte une solution du polymère ayant une teneur en matières solides de 40 à 65% en poids, les rapports quantitatifs des composants individuels les uns par rapport aux autres étant choisis de telle sorte qu'entre les groupes carboxyle du composant (A) et les groupes époxyde du composant (B), il y ait un rapport molaire de 3:1 à 1:3, et qu'entre le composant de résine époxyde et le composant de résine aminoplaste, il y ait un rapport en poids de 65:35% en poids à 98:2% en poids.

**3.** Composition durcissable, se composant de :

(A) un polymère ayant au moins deux groupes -COOH ;
(B) un polymère ayant au moins deux groupes époxyde ; et
(C) une résine aminoplaste,

caractérisée par le fait que, comme composant (A), est utilisé un copolymère d'acrylate ramifié, soluble, lequel peut être obtenu par copolymérisation de :

a1) 5 à 30% en poids d'un monomère ayant au moins deux doubles liaisons d'insaturation oléfinique, polymérisables, les di- et polyesters de di- et polyols avec l'acide acrylique étant exclus ;
a4) 0,1 à 20% en poids d'une amine tertiaire ayant une double liaison d'insaturation oléfinique, polymérisable;
a5) 5 à 40% en poids d'un monomère à teneur en groupe hydroxyle ; et
a3) 0 à 80% en poids d'autres monomères ayant une double liaison d'insaturation oléfinique, polymérisable,

la somme des composants a1), a3), a4) et a5) s'élevant à 100% en poids, dans un solvant organique, à une température de 70 à 130°C, de préférence, à une température de 80° à 120°C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation en vue de la préparation du copolymère d'acrylate étant conduite de telle sorte qu'il en résulte une solution du polymère ayant une teneur en matières solides de 40 à 65% en poids, et à partir de :

a6) anhydrides d'acides carboxyliques cycliques,
les rapports quantitatifs des composants individuels les uns par rapport aux autres étant choisis de telle sorte qu'entre les groupes carboxyle du composant (A) et les groupes époxyde du composant (B), il y ait un rapport molaire de 3:1 à 1:3, et qu'entre le composant de résine époxyde et le composant de résine aminoplaste, il y ait un rapport pondéral de 65:35% en poids à 98:2% en poids.

**4.** Composition durcissable, se composant de :

(A) un polymère ayant au moins deux groupes -COOH ;
(B) un polymère ayant au moins deux groupes époxyde ; et
(C) une résine aminoplaste,

caractérisée par le fait que, comme composant (A), est utilisé un copolymère d'acrylate ramifié, soluble, lequel peut être obtenu par copolymérisation de :

a1) 5 à 30% en poids d'un monomère ayant au moins deux doubles liaisons d'insaturation oléfinique, polymérisables ;
a7) 1 à 30% en poids de monomères ayant des groupes anhydride d'acide carboxylique cyclique,
a3) 45 à 80% en poids d'autres monomères polymérisables ayant une double liaison d'insaturation oléfinique, polymérisable,

la somme des composants a1), a3) et a7) s'élevant à 100% en poids,
dans un solvant organique, à une température de 70 à 130° C, de préférence, à une température de 80° à 120° C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation en vue de la préparation du copolymère d'acrylate étant conduite de telle sorte qu'il en résulte une solution du polymère ayant une teneur en matières solides de 40 à 65% en poids, et à partir de :

a8) des composés, qui contiennent, non seulement au moins un hydrogène susceptible de réagir avec des groupes anhydride d'acide, mais encore au moins un groupe amino tertiaire,

une partie des groupes anhydride d'acide carboxylique pouvant être mise à réagir également avec un composé monofonctionnel ayant un hydrogène actif, et les rapports quantitatifs des composants individuels les uns par rapport aux autres étant choisis de sorte qu'entre les groupes carboxyle du composant (A) et les groupes époxyde du composant (B), il y ait un rapport molaire de 3:1 à 1:3, et qu'entre le composant de résine époxyde et le composant de résine aminoplaste, il y ait un rapport pondéral de 65:35% en poids à 98:2% en poids.

**5.** Composition durcissable, se composant de :

(A) un polymère ayant au moins deux groupes -COOH,
(B) un polymère ayant au moins deux groupes époxyde ; et
(C) une résine aminoplaste,

caractérisée par le fait que, comme composant (A), est utilisé un copolymère d'acrylate ramifié, soluble, lequel peut être obtenu par copolymérisation de :

a1) 5 à 30% en poids d'un monomère ayant au moins deux doubles liaisons d'insaturation oléfinique, polymérisables ;
a9) 1 à 30% en poids d'esters glycidyliques d'acides carboxyliques à insaturation éthylénique et/ou d'éthers glycidyliques de composés à insaturation oléfinique,
a3) au moins 40% en poids d'autres monomères polymérisables ayant une double liaison d'insaturation oléfinique,

la somme de tous les monomères s'élevant à 100% en poids, dans un solvant organique, à une température de 70 à 130° C, de préférence, à une température de 80° à 120° C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation en vue de la préparation du copolymère d'acrylate étant conduite de telle sorte qu'il en résulte une solution du polymère ayant une teneur en matières solides de 40 à 65% en poids, et à partir de :

a10) des amines ayant un groupe amino secondaire ou des di-ou polyamines ayant au moins un groupe amino tertiaire et un groupe amino primaire ou secondaire, et/ou
a11) des acides carboxyliques, qui contiennent un atome d'azote tertiaire, et à partir
a6) des anhydrides d'acides carboxyliques cycliques,

les rapports quantitatifs des composants individuels les uns par rapport aux autres étant choisis de sorte qu'entre les groupes carboxyle du composant (A) et les groupes époxyde du composant (B), il y ait un rapport molaire de 3:1 à 1:3, et qu'entre le composant de résine époxyde et le composant de résine aminoplaste, il y ait un rapport en poids de 65:35% à 98:2% en poids.

**6.** Composition durcissable, se composant de :

(A) un polymère ayant au moins deux groupes -COOH,
(B) un polymère ayant au moins deux groupes époxyde ; et
(C) une résine aminoplaste,

caractérisée par le fait que, comme composant (A), est utilisé un copolymère d'acrylate ramifié, soluble, lequel peut être obtenu par copolymérisation de :

a1) 5 à 30% en poids d'un monomère ayant au moins deux doubles liaisons d'insaturation oléfinique, polymérisables ;

a2) 3 à 50% en poids d'un monomère à teneur en groupe carboxyle ; et

a5) 0 à 40% en poids d'un monomère à teneur en groupe hydroxyle ; et

a3) 0 à 80% en poids d'autres monomères ayant une double liaison d'insaturation oléfinique, polymérisable,

la somme des composants a1), a2), a3) et a5) s'élevant à 100% en poids,
dans un solvant organique, à une température de 70 à 130° C, de préférence, à une température de 80° à 120° C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation en vue de la préparation du copolymère d'acrylate étant conduite de telle sorte qu'il en résulte une solution du polymère ayant une teneur en matières solides de 40 à 65% en poids, et à partir:

a12) de monoisocyanates ayant un groupe amino tertiaire par molécule,

les rapports quantitatifs des composants individuels les uns par rapport aux autres étant choisis de sorte qu'entre les groupes carboxyle du composant (A) et les groupes époxyde du composant (a), il y ait un rapport molaire de 3:1 à 1:3, et qu'entre le composant de résine époxyde et le composant de résine aminoplaste, il y ait un rapport en poids de 65:35% en poids à 98:2% en poids.

**7.** Composition durcissable, se composant de :

(A) un polymère ayant au moins deux groupes -COOH,

(B) un polymère ayant au moins deux groupes époxyde ; et

(C) une résine aminoplaste,

caractérisée par le fait que, comme composant (A), est utilisé un copolymère d'acrylate ramifié, soluble, lequel peut être obtenu par copolymérisation de :

a1) 5 à 30% en poids d'un monomère ayant au moins deux doubles liaisons d'insaturation oléfinique, polymérisables ;

a2) 0 à 40% en poids d'un monomère à teneur en groupe carboxyle ; et

a5) 8 à 50% en poids d'un monomère à teneur en groupe hydroxyle ;

a3) 0 à 80% en poids d'autres monomères polymérisables ayant une double liaison d'insaturation oléfinique,

la somme des composants a1), a2), a3) et a5) s'élevant à 100% en poids,
dans un solvant organique, à une température de 70 à 130° C, de préférence, à une température de 80° à 120° C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation en vue de la préparation du copolymère d'acrylate étant conduite de telle sorte qu'il en résulte une solution du polymère ayant une teneur en matières solides de 40 à 65% en poids, et à partir de :

a12) des monoisocyanates ayant un groupe amino tertiaire par molécule,

a6) des anhydrides d'acides carboxyliques cycliques,

les rapports quantitatifs des composants individuels les uns par rapport aux autres étant choisis de sorte qu'entre les groupes carboxyle du composant (A) et les groupes époxyde du composant (B), il y ait un rapport molaire de 3:1 à 1:3, et qu'entre le composant de résine époxyde et le composant de résine aminoplaste, il y ait un rapport en poids de 65:35% en poids à 98:2% en poids.

**8.** Composition durcissable, se composant de :

(A) un polymère ayant au moins deux groupes -COOH,

(B) un polymère ayant au moins deux groupes époxyde ; et

(C) une résine aminoplaste,

caractérisée par le fait que, comme composant (B), est utilisé un copolymère d'acrylate ramifié, soluble, lequel peut être obtenu par copolymérisation de :

b1) 5 à 30% en poids d'un monomère ayant au moins deux doubles liaisons d'insaturation oléfinique, polymérisables ;

b2) 5 à 50% en poids d'un monomère à teneur en groupe époxyde ;

b3) au moins 10% en poids d'autres monomères ayant une double liaison d'insaturation oléfinique, polymérisable,

la somme des composants b1), b2), b3) s'élevant à 100% en poids,
dans un solvant organique, à une température de 70 à 130 ° C, de préférence, à une température de 80 ° à 120 ° C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation en vue de la préparation du copolymère d'acrylate étant conduite de telle sorte qu'il en résulte une solution du polymère ayant une teneur en matières solides de 40 à 65% en poids, les rapports quantitatifs des composants individuels étant choisis de sorte qu'entre les groupes carboxyle du composant (A) et les groupes époxyde du composant (B), il y ait un rapport molaire de 3:1 à 1:3, et qu'entre le composant de résine époxyde et le composant de résine aminoplaste, il y ait un rapport pondéral de 65:35% en poids à 98:2% en poids.

**9.** Composition durcissable, se composant de :
(A) un polymère ayant au moins deux groupes -COOH,
(B) un polymère ayant au moins deux groupes époxyde ; et
(C) une résine aminoplaste,
caractérisée par le fait que, comme composant (B), est utilisé un copolymère d'acrylate ramifié, soluble, lequel peut être obtenu par copolymérisation de :
b1) 5 à 30% en poids d'un monomère ayant au moins deux doubles liaisons d'insaturation oléfinique, polymérisables ;
b4) 5 à 50% en poids de monomères ayant au moins une double liaison polymérisable et un groupe fonctionnel F,
b3) d'autres monomères polymérisables,
la somme des composants b1), b4) et b3) s'élevant à 100% en poids,
dans un solvant organique, à une température de 70 à 130 ° C, de préférence, à une température de 80 ° à 120 ° C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation en vue de la préparation du copolymère d'acrylate étant conduite de telle sorte qu'il en résulte une solution du polymère ayant une teneur en matières solides de 40 à 65% en poids, et à partir de :
b5) un composé organique ayant au moins un groupe époxyde et un groupe capable de réagir avec le groupe fonctionnel F du monomère de b4),
les rapports quantitatifs des composants individuels étant choisis de sorte qu'entre les groupes carboxyle du composant (A) et les groupes époxyde du composant (B), il y ait un rapport molaire de 3:1 à 1:3, et qu'entre le composant de résine époxyde et le composant de résine aminoplaste, il y ait un rapport en poids de 65:35% en poids à 98:2% en poids.

**10.** Composition durcissable selon l'une des revendications 1, 4, 5, 6, 7, 8 ou 9, caractérisée par le fait que le composant a1) ou b1) correspond à la formule générale :

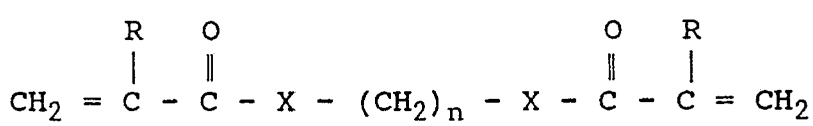

dans laquelle :
- $R = H$ ou $CH_3$
- $X = O, NR', S$ avec $R' = H$, alkyle, aryle
- $n = 2$ à 8.

**11.** Composition durcissable selon l'une des revendications 2 ou 3, caractérisée par le fait que le composant a1) correspond à la formule :

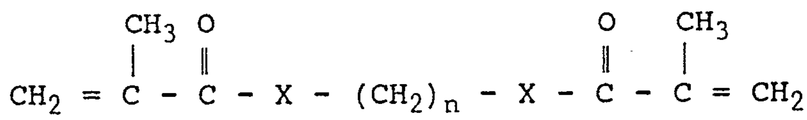

dans laquelle :

- X = O, NR', S avec R' = H, alkyle, aryle
- n = 2 à 8

ou un composé divinylique.

**12.** Composition durcissable selon l'une des revendications 1, 4, 5, 6, 7, 8 ou 9, caractérisée par le fait que le composant a1) ou b1) est un monomère ayant au moins deux doubles liaisons d'insaturation oléfinique, polymérisables, ce monomère étant un produit de réaction d'un acide carboxylique ayant une double liaison polymérisable et l'acrylate de glycidyle et/ou le méthacrylate de glycidyle, ou bien ce monomère étant un acide polycarboxylique ou un acide monocarboxylique insaturé, estérifiés par un alcool insaturé, contenant une double liaison polymérisable, ou bien ce monomère étant un produit de réaction de polyisocyanates avec des alcools ou amines contenant des doubles liaisons polymérisables, insaturées.

**13.** Composition durcissable selon l'une des revendications 1, 2, 6 ou 7, caractérisée par le fait que le monomère à teneur en groupe carboxyle (a2) est au moins en partie l'acrylate de $\beta$-carboxyéthyle.

**14.** Composition durcissable selon l'une des revendications 1, 2, 6 ou 7, caractérisée par le fait que le monomère à teneur en groupes carboxyle (a2) est au moins en partie un monomère ayant des groupes acide phosphorique.

**15.** Composition durcissable selon l'une des revendications 1 à 14, caractérisée par le fait que les autres monomères polymérisables ayant une double liaison d'insaturation oléfinique a3) ou b3) sont choisis dans le groupe du styrène, du vinyltoluène, des esters alkyliques de l'acide acrylique et de l'acide méthacrylique, des acrylates d'alcoxyalkyle et des acrylates d'aryloxyalkyle et les méthacrylates correspondants, les esters de l'acide maléique, fumarique, crotonique et diméthylacrylique.

**16.** Procédé de fabrication de la composition durcissable telle que définie à l'une des revendications 1 à 15, caractérisé par le fait que le polymère ayant au moins deux groupes époxyde (B) et la résine aminoplaste (C) sont mélangés l'un avec l'autre dans un solvant organique et que ce mélange est mélangé, avant le traitement, avec le polymère à groupes-COOH (A).

**17.** Agent de revêtement caractérisé par le fait qu'il contient la composition durcissable telle que définie à l'une des revendications 1 à 15, le cas échéant des catalyseurs, un solvant organique, le cas échéant des pigments et des adjuvants et additifs usuels.